(19) **Europäisches Patentamt**

**European Patent Office**

**Office européen des brevets**

(11) **EP 1 513 077 A2**

(12) **EUROPEAN PATENT APPLICATION**

(43) Date of publication:
**09.03.2005 Bulletin 2005/10**

(51) Int Cl.⁷: **G06F 17/30**

(21) Application number: **03022957.9**

(22) Date of filing: **09.10.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **27.08.2003 JP 2003302302**

(71) Applicant: **Hitachi, Ltd.
Chiyoda-ku, Tokyo 101-8010 (JP)**

(72) Inventors:
• **Oki, Yasuyuki, Hitachi, Ltd., Int. Prop. Group
Tokyo 100-8220 (JP)**
• **Iwasaki, Kazumasa Hitachi, Ltd., Int. Prop. Group
Tokyo 100-8220 (JP)**

(74) Representative: **Strehl Schübel-Hopf & Partner
Maximilianstrasse 54
80538 München (DE)**

(54) **Method and system of searching for media recognition site**

(57)     The user terminal 110 executes a search condition input tool 111 according to sample video data stored thereinbeforehand to create a first media feature value 121 (correct feature value) to be assumed as a reference for searching for a media recognition site. The media recognition server 150 recognizes the sample video 119 and transmits a second media feature value that is a result of the recognition to the user terminal. The user terminal 110 then compares the correct feature value created beforehand with the second media feature value that is a result of the recognition executed at the media recognition server to select a media recognition site that executes the recognition processing according to a user's request.

*FIG. 1*

EP 1 513 077 A2

**Description**

BACKGROUND OF THE INVENTION

The present invention relates to a system searching for media recognition sites that recognize such media data as video respectively, more particularly to a system searching for media recognition sites that recognize media data matching with requests from users.

In recent years, there have appeared various media recognition network systems recognizing such media data as video and audio data. In each of those systems, end users who have media data connect a media data recognition computer (hereinafter, to be referred to as a media recognition site) connected to a network and transmit the media data to the media recognition site. The media recognition site then returns metadata for denoting that the received media data has been recognized to the user. The method that recognizes media data such way is disclosed in Japanese Patent Laid-Open No. H10-282989.

One of the methods for searching for various processing services available through a network is disclosed as a Web service searching directory UDDI (http://www.uddi.org). In the case of the UDDI, Web service category information, Web service input and output data types (data types) are specified as search conditions. A user who wants to use such a Web service specifies both input and output data types together with Web service type information to obtain a target Web service site address, then get connected to the site.

In the media recognition network system, a user, when searching for a media recognition site, specifies a recognition site input type information (search conditions) that includes a media type (video, audio, or 3D) and its format (including both width and height of the target image, a compression method, the number of colors, and the number of audio channels). Similarly, the user specifies an output metadata type as the output type of the recognition site.

SUMMARY OF THE INVENTION

However, in the above-described media recognition network system, the user might not be able to search for/ select a desirable media recognition site if the user searches for it only by specifying input and output data types. This is often caused by the mismatch between the object that the user wants to recognize and the result of the recognition by the media recognition site. And, this might occur even when the media recognition method is the same between the user and the selected media recognition site; moreover, the recognition accuracy of the selected site is high. For example, if a soccer ball is followed up in a TV soccer program with use of a video obj ect follow-up function, a motion follow-up recognition site might follow up a soccer player while another motion follow-up recognition site follows up the soccer ball correctly. In this case, the input and output data types are the same between those motion follow-up recognition sites, that is, "video and motion information". However, because both of the sites use their own algorithms to follow up motions accurately, one of the sites comes to return the soccer player's motion to the user, although the information is not desired by the user.

Under such circumstances, it is an object of the present invention to provide a media recognition site searching system for searching for a media recognition site according to the request of each user in accordance with the search conditions set for the user's desired media data.

In order to achieve the above object, each user terminal uses a search condition input tool to create a firstmedia feature value (correct feature value) to be assumed as a reference for searching for a target media recognition site on the basis of the sample video (image) data stored beforehand. A media recognition server recognizes and processes the sample image and transmits a second media feature value to the user terminal. The second media feature value is a result of the recognition by the media recognition server. The user terminal then compares the created correct feature value with themedia feature value returned from the media recognition server to select a media recognition site that executes recognition processing according to the user's request.

BRIEF DESCRIPTION OF THE DRAWINGS

Fig.1 is a block diagram of a media recognition site searching system in an embodiment of the present invention;
Fig.2 is a flowchart of the entire processings of the system in the embodiment of the present invention;
Fig.3 is a menu screen for each target recognition type and a collection of search condition input tools stored in a search condition input tool acquisition server 140;
Fig.4 is an example of an execution screen of the search condition input tool 111;
Fig.5 is a flowchart of the processings of the search condition input tool 111;
Fig.6 is a flowchart of media recognition site search processings of a user terminal 110; and

Fig.7 is a flowchart of search condition collation processings of a media recognition server.

DETAILED DESCRIPTION OF THE PREFERRED EMBODIMENT

Hereunder, a preferred embodiment of the present invention will be described in detail with reference to the accompanying drawings. The present invention is not limited only to the embodiment, however.

At first, the embodiment of the present invention will be described with reference to the accompanying drawings. Assume that a user wants to analyze his/her own soccer video so as to analyze a soccer game. The video analysis is made first by collecting information about how the soccer ball has been moved around, then analyzing the motion of each player in the game in detail. Hereinafter, how the soccer ball movement is to be analyzed will be described concretely with use of the recognition site searching system in this embodiment.

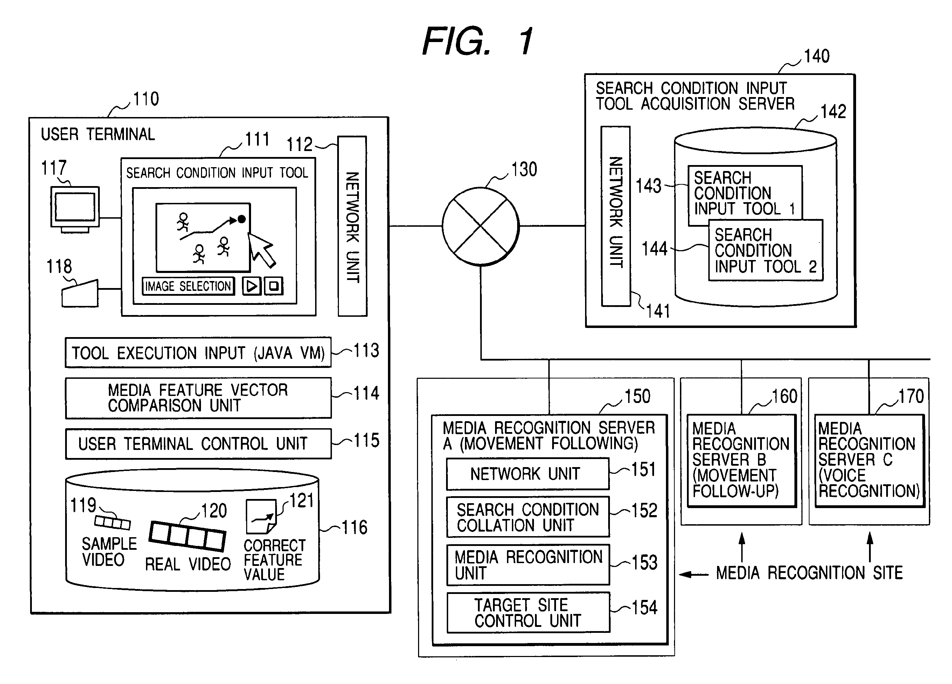

A description will be made first for the media recognition site searching system in the embodiment of the present invention with reference to Fig.1. This system that is disposed at the user side comprises a user terminal 110 to be operated by the user, a plurality of media recognition servers 150, 160, and 170 for receiving such media data as video and audio data, analyzing/recognizing the data content, then returning a result to the user terminal 110 as a media feature value, and a search condition input tool acquisition server 140 for facilitating the user to search media recognition sites. The servers 150 to 170 and the user terminal 110 are connected to a network 130 respectively. In Fig.1, it is premised that each of the media recognition server A150 and the media recognition server B160 is provided with a motion follow-up recognition function for finding/following up a target object moving in video while the media recognition server C170 is provided with a voice recognition function for recognizing the content of inputted voice data to translate the content into text data.

The user terminal 110 executes the search condition input tool 111 that is a program code. This search condition input tool 111 is used for the user terminal 110 to search for/select a targetmedia recognition site in accordance with each operation of the user. This program code is executed by the tool execution unit 113. The program code may be a native code depending on the CPU. The search condition input tool 111 may be provided with an input device 118 such as a keyboard, a mouse, etc., as well as a display device 117 for displaying user operation results as needed.

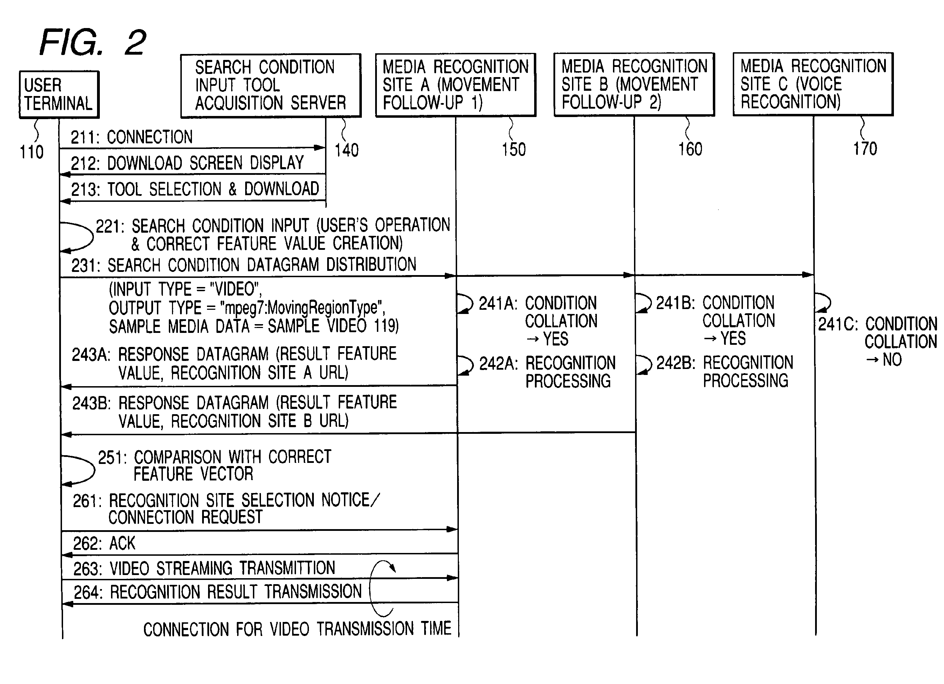

The user terminal 110 is configured by a network unit 112 for transmitting/receiving information to/from external with use of the TCP/IP network connection protocol, a hard disk drive (a storage unit) 116 for storing various types of data, a media feature value comparison unit 114 , and a user terminal control unit 115 for controlling each unit provided in the user terminal 110. The user terminal control unit 115 is a general computer provided with a CPU and a memory. The control unit 115 stores a program used for executing processings as shown in the flowchart of Fig. 2 in the user terminal 110. In this embodiment, the hard disk drive 116 stores sample video data 119, which is temporary video data used for searching for a recognition site, real video data 120 that includes an image to be analyzed actually, and a correct feature value 121, which is recorded as a correct value of the metadata desired by the user. Although video data is used as a sample in this embodiment, voice data comes to be recorded for searching for voice recognition sites and photo data comes to be recorded for searching for face recognition sites.

The search condition input tool acquisition server 140 stores a plurality of search condition input tools 143, 144, etc. in its storage unit 142 to manage media recognition sites connected to the network, by classifying the categories of media recognition methods. The server 140 is accessed mainly from the user terminal 110. The server 140 is also provided with a network unit 141.

Each of the media recognition servers 150, 160, and 170 receives media data through a network and recognizes the received media data with use of a media recognition unit 153, then returns a media feature value to the user terminal 110 as the recognition result. Each of the servers 150 to 170 is provided with a network unit 151 through which it is connected to a network.

Furthermore, each of the servers 150 to 170 is provided with a search condition collation unit 152 for checking whether or not a search condition for searching for a media recognition site matches with that stored in its own media recognition unit 153 and a recognition site control unit 154 for controlling each unit provided in the subject media recognition server. Similarly to the user terminal control unit 115, the recognition site control unit 154 is configured by a computer and a program. Each of the media recognition servers 160 and 170 is configured similarly to the media recognition server 150.

The recognition processing of the media recognition unit 153 may be any of the recognition processing by automatic follow-up of an object moving in video data, the recognition processing by extracting part of a video color to denote it, and the voice recognition processing by recognizing the content of an utterance from an inputted voice and returning the content as text data. To do such recognition, it is premised to use a known media recognition product (voice recognition software and/or video recognition software), while no detailed description is made for them here. In this embodiment, it is important what data type is used to input media data and what data type is used to output media feature values in the recognition processing.

In this embodiment, the sample video data 119, the real video data 120, the media feature value comparison unit 114, and the tool execution unit 113 are provided at the user terminal 110 side. However, those items may be provided at another site (computer or server) connected to the network. For example, it is possible to store video data itself (generally, media data) in another site and record only its storage location URL in the user terminal 110 so that the user terminal 110 and the media recognition server 150 can download the real video data according to the URL as needed or obtain the real video data in a streaming manner. Consequently, the same operation as that in this embodiment can be realized. Similarly, both search condition input tool 111 and tool execution unit 113 may be disposed in the search condition input tool acquisition server 140, not in the user terminal 110 so that any of the search condition input tool 111 and the tool execution unit 113 can access the display unit 117, the input unit 118, and the hard disk drive 116 provided in the user terminal 110 through the network to obtain the real data. Also, the media feature value comparison unit 114 is provided in the user terminal 110, but since it is actually required to compare similarity among various media feature values, a similarity comparison server and the like may be provided additionally and the server may recognize and process.

Next, a description will be made for how to specify input and output data types to search for a media recognition site. An information description method for multi-media contents ruled by the ISO MPEG-7 (ISO/IEC 15938) can be used to specify input and output data types. The MPEG-7 regulates various standard types for describing media information with use of a type definition language developed on the basis of the W3CXML Schema. For example, the XML type referred to as "mpeg7:MediaFormatType" (or <MediaFormat> tag) may be prepared as a data type for describing a video type and a format so as to describe detailed format information. Similarly, various standard types such as those related to video data (colors, shapes, and motion follow-up information) and those related to audio data (texts as voice recognition results) are prepared as metadata types. For example, the motion follow-up information includes a type of "mpeg7:MovingRegionType" (or <MovingRegion> tag) that can describe a shape of each object and its motion information with time (coordinate positions x and y in an image and a list of the movements of the image with time t) collectively. Of the related information of media data referred to as metadata, the similarity between two metadata items can be calculated arithmetically. Such similarity is referred to as a media feature value (or a feature value simply) .

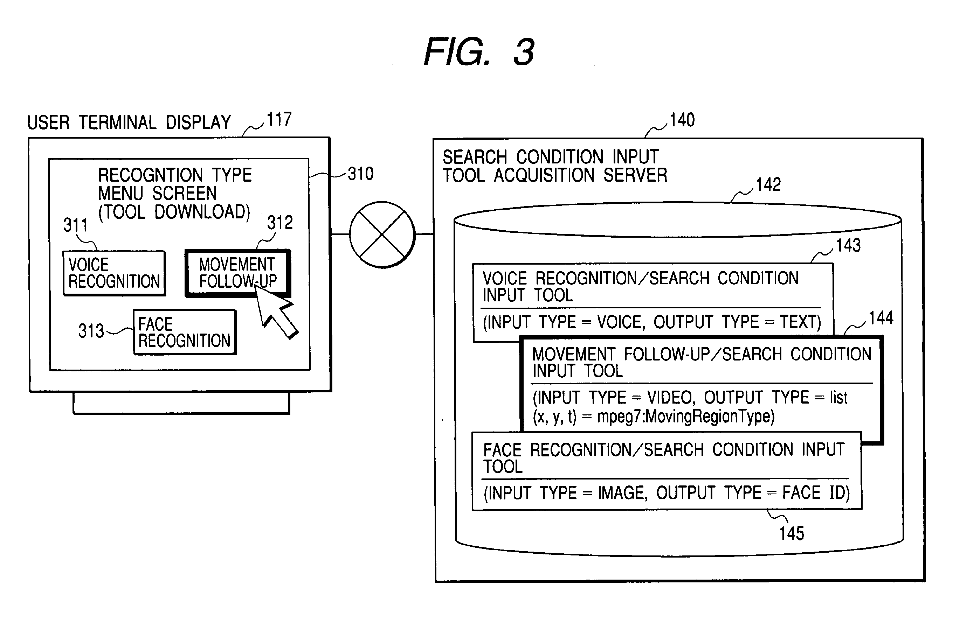

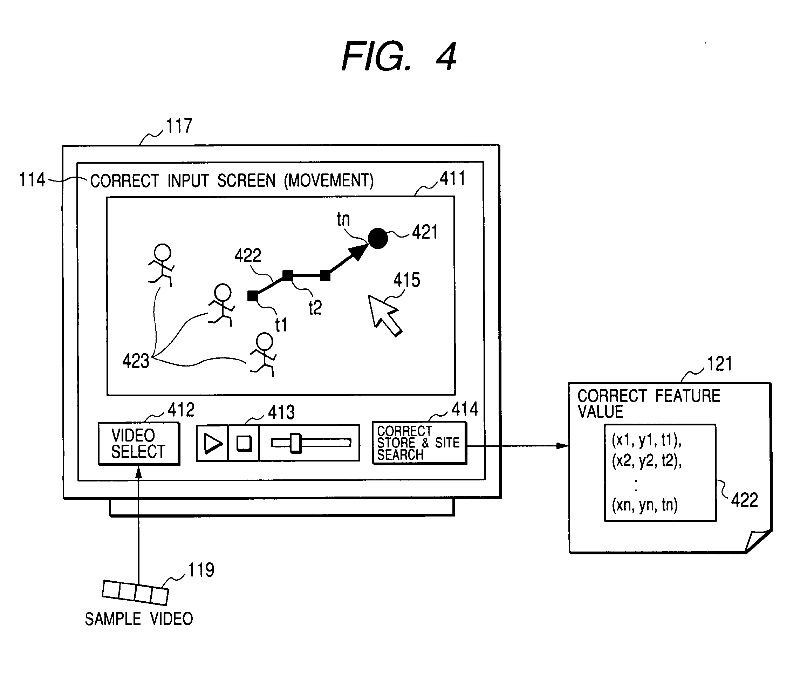

Next, a description will be made for the processings of the system with reference to the flowchart shown in Fig.2, as well as the interface screens of the user terminal shown in Figs.3 and 4.

Fig.2 shows a flowchart of the processings of the system for searching for/selecting a media recognition server.

At first, the user terminal 110 gets connected to the search condition input tool acquisition server 140 (step 211). The display unit 117 of the user terminal 110 displays the recognition type menu screen 310 shown in Fig.3 (step 212). If the user selects a media recognition type on the menu screen 310, the terminal 110 transmits the selection information to the search condition input tool acquisition server 140. The server 140 then downloads a search condition input tool stored in the storage unit 142 and corresponding to the selected media recognition type to the user terminal 110 (step 213). In Fig. 3, the "motion follow-up" button 312 is clicked, the search condition input tool for "motion follow-up" 144 is downloaded to the user terminal 110.

After that, the user terminal 110 executes the received search condition input tool 144 to create a correct feature value 121 in the user terminal 110 (step 221). In this embodiment, the correct feature value is, for example, "following up a ball" in the sample video.

After the correct feature value 121 is created in step 221, the user terminal 110 transmits the search condition datagram to all the media recognition sites connected to the network (step 231). The search condition datagram includes both input and output data types of each media recognition site, as well as sample media data (sample video data 119 in this case). The details of the search condition datagram will be described later.

When the search condition datagram is distributed through the network in step 231, each of the media recognition servers 150, 160, and 170 that have received the datagram collates both input data type and output data type in the search condition datagram with those specified in its own media recognition unit, whether or not the both data types match with the specification of the media recognition unit (step 241A, B, and C). In that case, the media recognition server C170 is a voice recognition server, so that the server C170 cannot process the sample data (sample video 119) (step 241C). If the collation result is NO such way, the media recognition server C170 does not execute any of the recognition processing and return processing in the subsequent steps.

Each of the media recognition servers A150 and B160 is a server for recognizing and processing "motion follow-up", so that the collation result in each of those servers becomes YES. Each of the servers A150 and B160 executes the processing of the motion follow-up with use of its media recognition unit 153 according to the sample video data 119 included in the received search condition datagram (step 242A and B). Each of the media recognition servers A150 and B160 describes the result of the motion follow-up (listing of (x,y,t)) in the format of MPEG-7 feature value <MovingRegion> and transmits the result to the user terminal 110 together with the URL for identifying each of A150 and B160 (steps 243A and B).

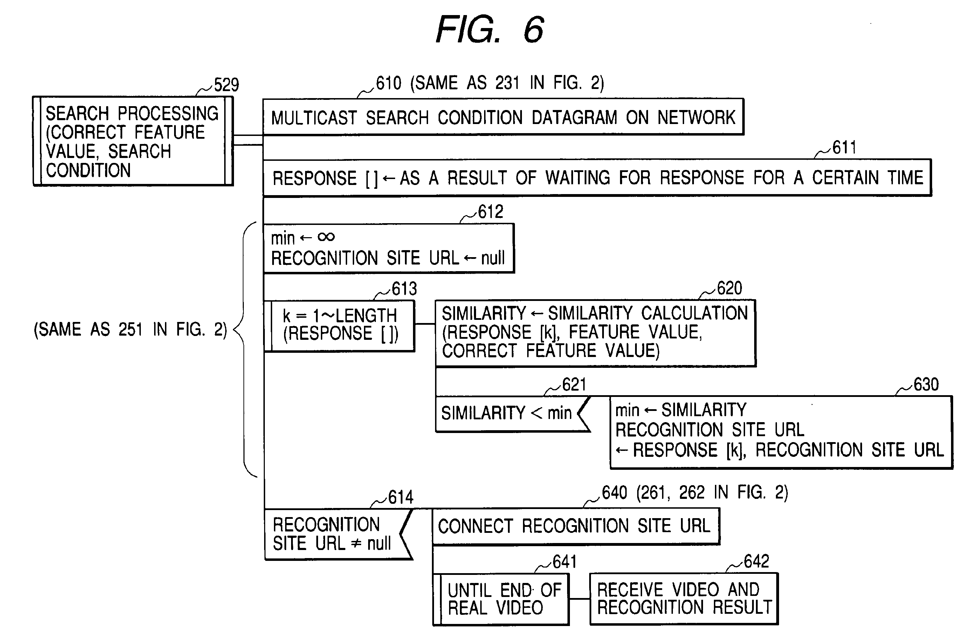

Then, the user terminal 110 compares the MPEG-7 <MovingRegion> feature value returned from each media recognition site with the correct feature value 121 stored in itself 110 to check the similarity between them (step 251). The user terminal 110 selects a recognition site for outputting the recognition result (feature value) closest to the correct feature value 116. Fig.6 shows a concrete flowchart of the processings in step 251. It is premised here that the media recognition site A150 is selected as a site that has returned a feature value closest to the correct feature value.

As described in step 221, this time correct feature value 121 is a feature value of "following up a ball". Selecting a feature value closest to the correct feature value 121 from among the feature values returned from media recognition sites means selecting a recognition site that follows up a ball most closely to the user's expectation of among those of other "motion follow-up" recognition sites. This is why the user can search for/select the optimal media recognition site from many media recognition sites.

After that, the user terminal 110 transmits a selection notice to the selected media recognition site A150 and issues a request for connection so as to distribute the real video data 120 to the site A150 (step 261). Receiving the request, the media recognition site A150 returns an ACK signal for denoting "connection OK" to the user terminal 110 (step 262). The user terminal 110, when receiving the ACK signal, distributes the real video data 120 to the site A150 in a streaming manner (step 263) while the site A150 executes the processing of the motion follow-up to the received real video data 120 sequentially and returns each recognition result to the user terminal 110 (step 264). This streaming distribution is continued until the user terminal 110 stops the distribution.

In this embodiment, the MPEG-7 description method is used to represent both input and output data types in the search condition datagram distributed in step 231. For example, to represent "352x240 size, 2Mbps video, no sound", it may be described as follows.

```
<MediaFormat xmlns = "http://www.mpeg7.org/2001/MPEG-7_
Schema">
        <Format>
          <VisualCoding>
           <BitRate>2000000</BitRate>



            <Frame width = "352" height= "240" />
          </VisualCoding>
        </Format>
      </MediaFormat>
```

Similarly, to represent a motion feature value as an output type, it may be described as follows.

```
        <outputType xmlns:mpeg7=
        "http://www.mpeg7.org/2001/MPEG-7_Schema"
              name= "mpeg7:MovingRegionType" />
```

In this case, <outputType> denotes a tag defined in this embodiment and this represents ""MovingRegionType" type, which is a feature value described, for example, as <MovingRegion> of MPEG-7". The content of MovingRegionType is defined with a schema in a place denoted with xmlns:mpeg7.

The entire sample video data 119 transmitted in step 231 is added to the search condition datagram to simplify the description. It is also possible to describe only the URL denoting a place that stores the sample video data in the search condition datagram so that the media search site that receives the search condition datagram can access the sample video through the URL as needed. This is desirable, since the communication traffic is reduced in that case. Similarly, while search condition datagram is distributed in a multicasting manner in the entire network area in this embodiment, it may also possible to provide a kind of intermediate center server (cache & proxy server for search conditions) that narrows the multicasting area and transmits the search condition datagram to the server. This method will be able to reduce the communication traffic more (while the processing load of the center server increases) .

Fig.3 shows a recognition type menu screen 310 displayed in step 212 shown in Fig.2. The screen 310 is formed with, for example, the WebCGI and includes download buttons 311 to 313 corresponding to the media recognition types (voice recognition, motion follow-up, and face recognition). Those recognition types are obtained by classifying many media recognition sites connected to a network by recognition methods. For example, there are many methods for following up motions of a video object such as following up a specific color of the object, extracting only the motion information of an object according to a difference between the video data items, and following up an object by patterning a specific shape of the object. In this embodiment, all those methods are grouped into a "motion follow-up" category to facilitate the user to understand the recognition method.

When forming the recognition type menu screen 310 shown in Fig.3, the search condition input tool acquisition server 140 must manage the categories of recognition types before storing search condition input tools in the recording unit 142. To meet this requirement, category information is managed as a set of <input data type and output data type> for media recognition processings. For example, for the search condition input tool 144 , both input and output data types can be described as <input data type = video, output data type = motion information> using the MPEG-7 method as described in step 231 shown in Fig.2. Similarly, for voice recognition, both input and output data types can be described as (input data type = voice, output data type = text). The search condition input tool acquisition server 140 adds a recognition type such as "motion follow-up", "voice recognition", etc. and a search condition input tool program corresponding to the recognition type to those sets of input data type and output data type so as to manage them in a database. This is why the search condition input tool acquisition server 140 can use a list of such recognition types for the WebCGI screen format to form the recognition type menu screen 310. It is also possible to search for any of those recognition types on the recognition type menu screen 310. For example, a summary statement is created for a recognition type and stored together with the recognition type in the DB beforehand so that the recognition type is searched with use of the full text searching function of the DB, thereby the user can understand the screen 310 with the summary statement more easily.

Fig.4 shows a screen displayed for executing the search condition input tool 144 (shown in Fig.3 and selected in step 213 in Fig.2) in step 221 in Fig.2. The screen shown in Fig.4 shows an example in which search conditions are set so as to open a TV soccer program that is the sample video 119 to follow up the soccer ball in the video data. The search condition input tool uses a program format provided with user's screens, so that each user screen specialized to various media recognition processing can be given. Consequently, the user can input search conditions (that is, the correct feature value 121) for a recognition site of "motion follow-up" without knowing so much about the recognition technique.

Next, the display screen 117 shown in Fig. 4 will be described. This screen is used to input search conditions for searching for/selecting a recognition site on the basis of the user's request from among a plurality of motion follow-up recognition sites. Concretely, the search condition input tool 144 inputs the sample video data 119 used for searching for/selecting the target recognition site, then sets the correct feature value 121 and outputs it in accordance with each user's operation. In this embodiment, a short video story 411 of soccer is specified as the sample video data 119. The sample video data 119 is different from the real video data 120. However, the real video data 120 may be used directly or the sample video data 119 may be obtained from the video list stored in a file server connected to the network. In this embodiment, such a short video story specified as the sample video data 119 makes it easier for the user to input search conditions (that is, the correct feature value). In addition, the use of specific video data that is known only by the user (that is, it is not opened to the network) as the sample video data 119 makes it easier for the user to understand how the correct feature value is hidden from the user. On the screen 411 on which the sample video data 119 is played back at the current time, both soccer player 423 and soccer ball 421 are displayed. On the screen are also displayed a locus line 422 of the soccer ball inputted by the user and a mouse cursor 415 used for the local line 422. The information inputted by the user on the screen denotes "what the user expects as the recognition result to be received from the recognition site is not following up any soccer player, but following up the soccer ball". And, this tool makes it possible for the user to specify target search conditions such as distinguishing between following up a soccer player and following up a soccer ball easily when in searching for/selecting a media recognition site.

Next, how to operate the screen 117 shown in Fig.4 will be described. On the screen 117, the user clicks the video select button 412 to specify the sample video data 119. Then, the user operates the video operation panel 413 to display the initial time t1 on which the soccer ball in the sample video 119 is displayed. If the user moves the mouse cursor to the soccer ball on the display screen 411 and clicks the cursor button there at the time t1, the time t1 and the mouse cursor coordinates x1 and y1 are added to the subject correct feature value as an element (x1, y1, and t1). By setting the time forward step by step and clicking each position of the soccer ball repetitively, the locus (x1, y1, and t1) (x2, y2, and t2),... of the soccer ball between the time t1 and the current time tn can be registered as the correct feature value 422. When the coordinate data 422 of the correct feature value get together to a certain amount, the user clicks the correct feature value store & site search button 414, thereby the correct feature value data 422 (coordinate data in this case) is stored in the correct feature value storage area 121 in the hard disk drive 116 of the user terminal 110.

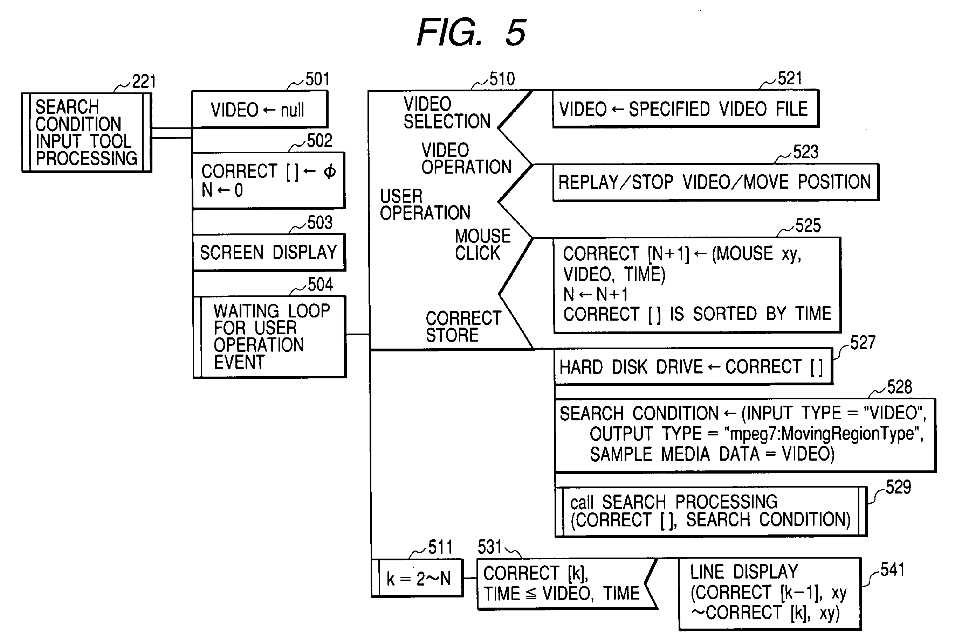

Fig.5 shows a flowchart of the processings of the search condition input tool 144 (Fig.3) in step 221 in Fig.2. At first, the tool 144 initializes video data to null, since it is not selected yet (step 501). Similarly, the tool 144 clears the correct feature value array and the N for denoting the number of correct feature values to 0 respectively (step 502). After that, the tool 144 displays a screen (step 503), then enters a loop for waiting for a user's operation event (step 504).

The tool 144 then decides what operation is done on the screen (step 510). If the user has clicked the video select button 412 (Fig.4), the tool 144 initializes the target video to a video file (sample video) specified by the user (step 521) . If the user operates the video operation panel 413 in step 510, the tool 144 plays back/stops the video or moves the position of the video data according to the user specified operation (step 523). If the user clicks the mouse button in step 510, the tool 144 adds a set of data <x and y coordinates of the mouse and the current time> to the correct feature value array, then sorts the correct feature values in the array in sequence of time (step 525). Each time the mouse button is clicked, the tool 144 adds a set of correct feature value (coordinate points and the current time) to the correct feature value array. In this embodiment, no deletion function usable for the correct feature value array is described so as to simplify the description. Actually, however, it is possible to provide the tool 144 with such a deletion function as a polygonal line drawing function of a drawing software program. The drawing function deletes a control point when the mouse cursor positioned on the control point is clicked ([ctrl]+click). If the user clicks the correct store & site search button 414 in step 510, the tool 144 stores the correct feature value in the hard disk drive 116 of the user terminal 110 (step 527). And, as described above, the search condition datagram is created as <input data type = video, output data type = motion follow-up feature value "mpeg7:MovingRegionType", sample media data = sample video 119>(step 528). After that, the user terminal 110 searches for the target media recognition site (step 529).

After ending the decision for the user's operation (step 510) , the user terminal 110 displays correct feature value array data as a motion locus 422 on the video screen 411. Concretely, the user terminal 110 loops all the whole correct arrays (step 511). In this case, 2 is assumed as the starting value of the loop for drawing a line between two points. Because the correct feature values only in a section between a past time and the current time of the video data must be drawn on the screen in the loop, the user terminal 110 checks the correct feature value [k] time (step 531). If the target correct feature value is positioned before the current time, the user terminal 110 uses the xy coordinate set to display the target line on the screen (step 541).

Fig.6 shows a detailed flowchart of the processings in step 529 in Fig.5. In other words, the flowchart denotes processings carried out by the user terminal 110 after a correct feature value is specified in the user terminal 110. The search processing 529 denotes the processings in steps 231 to 264 of Fig.2 concretely. In the processing in step 529, the correct feature value and the search condition datagram are inputted.

At first, the user terminal 110 multicasts the search condition data through the network (step 610). Then, the user terminal 110 waits for the datagram to be returned for a certain time and, during that time, adds the datagram returned to the user terminal 110 to the response array (step 611). The user terminal 110 then searches for a returned datagram closest to the correct feature value from among the returned feature values. Concretely, the user terminal 110 initializes the minimum similarity min to a limitless value and the optimal recognition site URL to null respectively (step 612). After that, the user terminal 110 repeats the processings in the steps 620 to 630 for all the returned data (step 613). In step 613, the tool 144 calculates the similarity between the feature value in the returned datagram [k] and the correct feature value 121. Although the details of the similarity calculation is omitted here, the following expression may be used to calculate the similarity just simply, for example, when there are motion follow-up feature values A and B, each consisting of a <x,y,t> array just like in this embodiment.

$$\text{Similarity Diff}(A,B) = 1/NT\ S\ |xy(A, t)-xy(B, t)\ I$$

(Every $t \in T$)
A,B = motion follow-up feature values = <x,y,t> set
T = all "t" sets included in both A and B
NT = the number of elements in T
xy(C, t)
      =(C[k].x, C[k].y)... if C[k].t=t<C[k+1].t
      (C[1].x, C[1].y)... if t<C[1].t

(C[NC].x, C[NC].y)... if C[NC].t=t

NC = the number of elements in C

|xy| ... Vector xy norm

The user terminal 110 then decides whether or not the calculated similarity value is smaller than the current min (step 621). If the decision result is YES (smaller) , the user terminal 110 inputs the similarity value calculated in step 620 in min to update the min, then updates the recognition site URL to the URL of the recognition site recorded in the returned datagram (step 630). Finally, the user terminal 110 checks whether or not the recognition site URL is null (step 614). If the check result is not null, it means that the searched/selected recognition site is optimal. The user terminal 110 then get connected to the media recognition site denoted by the recognition site URL (step 640) and loops until the real video 120 is sent out completely (step 641). After that, the user terminal 110 transmits the data in a streaming manner, and the media recognition server recognizes and processes the data and transmits the recognition result to the user terminal 110 (step 642). This series of processings are repeated.

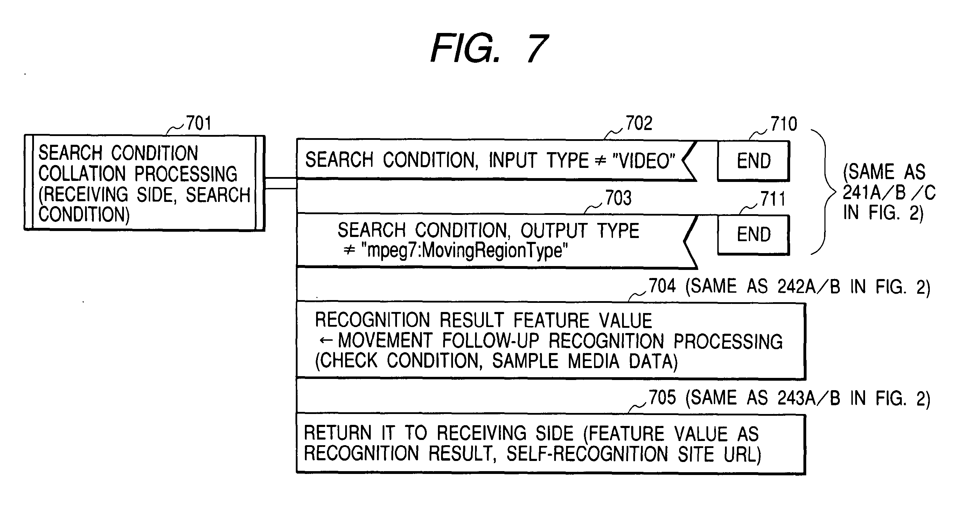

Fig.7 shows a flowchart of the search condition collation processings (step 241 in Fig.2) carried out by the media recognition server 150. The similar processings are executed in steps 241B and 241C in Fig.2. The input parameters of the search condition collation (step 701) in Fig.7 are receiving side information (IP address, URL, etc. of the user terminal 110) and the search condition datagram.

At first, the media recognition server 150 decides whether or not the input data type in the search condition datagram is "video" (step 702). In the case of the MPEG-7 description method in this embodiment, if a <VideoCoding> tag is included in the <MediaFormat> tag, the server 150 decides the input data type as "video". If not (ex., "audio"), the server 150 terminates the search condition processing 701 (step 710) , since the server 150 cannot process the data. The server 150 then checks whether or not the output data type in the search condition is "mpeg7:MovingRegionType" (step 703). If the check result is not "mpeg7:MovingRegionType" (but, ex., color information "mpeg7:DominantColorType"), the server 150 terminates the search condition processing (step 711), since the media recognition site cannot process the data. If the media recognition site can process both input and output data types, the media recognition server 150 executes the motion follow-up recognition processing according to the sample media data (sample video 119) included in the search condition datagram (step 704). The server 150 then stores the result in the storage unit (not shown) as a recognized feature value and pairs the recognized feature value with the URL of the self-media recognition site in the response datagram, then returns the datagram to the user terminal 110 (step 705).

This completes the description for the flowchart of the entire system processings in the embodiment of the present invention. The embodiment of the present invention thus makes it possible to select a recognition technique to be easily understood from amongmany recognition techniques so as to search for/select an optimal media recognition site matching with search conditions including the user's subjectivity by making good use of the search condition input tool acquisition server 140, the search condition input tools 143 to 145, the correct feature value 121, and the sample video 119.

In this embodiment, it is possible to input search conditions in accordance with the user's subjectivity, since what the user wants, a soccer player or soccer ball, can be set interactively with use of a search condition input tool. And, by storing each search condition inputted by the user as a correct feature value in the user terminal and making a media recognition site recognize the same sample media data and compare on similarity, it is possible to select the media recognition site closer to the user's subjectivity.

According to the present invention, therefore, it is possible to select an optimal media recognition site executing recognition processing in accordance with the user's request from among many media recognition sites.

## Claims

1. A method of searching for a media recognition site, employed for a media data recognition system that includes a media recognition server for recognizing media data and a user terminal connected to the media recognition server through a network, the method comprising the steps of:

    creating, at the user terminal, a first media feature value to be assumed as a reference for searching for a media recognition site according to sample data stored beforehand;
    transmitting, at the user terminal, the sample data stored beforehand to the media recognition server;
    recognizing and processing, at the media recognition server, the sample data transmitted from the user terminal;
    transmitting, at the media recognition server, a second media feature value that is a result of the recognition by the media data recognition server to the user terminal;
    comparing, at the user terminal, the second media feature value transmitted from the media data recognition server with the first feature value created therein; and

selecting, at the user terminal, a media recognition site according to a result of the comparison so as to request the selected site to recognize media data which the user terminal has.

**2.** The method according to claim 1, further comprising steps of:

requesting, at the user terminal, the selected media recognition site to recognize and process the media data which the user terminal has; and
transmitting, at the user terminal, the media data which the user terminal has to the media recognition site when receiving information for denoting acceptance of the request from the selected media recognition site.

**3.** The method according to claim 1, further comprising steps of:

transmitting, at the user terminal, a recognition processing type of the sample data to the media data recognition server,
selecting, at the media recognition server, a search condition input tool corresponding to the recognition processing type transmitted from the user terminal and transmitting the selected search condition input tool to the user terminal; and
creating, at the user terminal, the first media feature value with use of the transmitted search condition input tool.

**4.** The method according to claim 1, further comprising steps of:

specifying, at the user terminal, a search condition including both input data type and output data type of the media recognition site to be searched; and
transmitting, at the user terminal, the specified search condition together with the sample data to the media recognition server.

**5.** The method according to claim 4, further comprising steps of:

receiving, at the user terminal, the second media feature value from a media recognition server that manages a media recognition site matching with the search condition.

**6.** The method according to claim 5, further comprising steps of:

receiving, at the user terminal, an identifier for identifying the media recognition site that matches with the search condition together with the second media feature value.

**7.** A media recognition site searching system searching for a media recognition site that recognizes media data that matches with a user's request, the system comprising:

a user terminal provided with a search condition input tool execution unit creating a first media feature value to be assumed as a reference for searching for the media recognition site with use of sample data stored beforehand, a storage unit storing the created first media feature value, and a transmission unit transmitting the sample data stored beforehand; and
a media recognition server provided with a media recognition unit recognizing and processing sample data transmitted from the user terminal and a transmission unit transmitting a second media feature value that is a result of the recognition processing to the user terminal;

wherein the user terminal compares the second media feature value transmitted from the media recognition server with the stored first media feature value to select a media recognition site to be requested for recognition processing of media data.

**8.** The system according to claim 7, wherein
the storage unit of the user terminal stores media data to be recognized,
the transmission unit of the user terminal transmits a request for recognition of the stored media data to the media recognition site selected as the result of the comparison, and
the transmission unit of the user terminal transmits the stored media data to the media recognition site when in receiving information for denoting acceptance of the recognition request from the media recognition site.

**9.** The system according to claim 7, wherein

the user terminal further includes a display unit displaying a screen for selecting a recognition type used to recognize the sample data stored beforehand,

the transmission unit of the user terminal transmits recognition type information selected on the screen to the media recognition server,

the transmission unit of the media recognition server transmits a search condition input tool corresponding to the recognition type information received from the user terminal to the user terminal, and

the user terminal creates the first media feature value with use of the received search condition input tool.

**10.** A method of searching for a media recognition site that searches for a media recognition site that recognizes mediate data that matches with a user's request, the method comprising the steps of:

accepting a selected recognition type for recognizing sample data stored beforehand;

downloading a search condition input tool corresponding to the selected recognition type information;

creating a first media feature value to be assumed as a reference for recognizing and processing media data with use of the downloaded search condition input tool and according to the sample data stored beforehand;

creating a search condition of the media recognition site according to the created first media feature value;

transmitting the created search condition and the sample data to the media recognition site that recognizes media data;

checking whether or not the recognition processing executed at the media recognition site matches with the search condition;

recognizing and processing the received sample data if the recognition processing matches with the search condition as a result of the check;

transmitting a second media feature value that is a result of the recognition processing and an identifier of the media recognition site that has recognized and processed the media data;

comparing the second media feature value with the first media feature value; and

searching for a media recognition site to be requested for recognition processing of media data according to the result of the comparison.

**11.** A computer program to be executed by a media data recognition system provided with a media recognition server for recognizing media data and a user terminal connected to the media recognition server through a network, the computer program for causing the media data recognition system to perform the steps of:

creating a first media feature value to be assumed as a reference for searching for a media recognition site according to sample data stored beforehand;

recognizing and processing the sample data stored beforehand;

comparing a second media feature value that is a result of the recognition with the created first media feature value; and

selecting the media recognition site to be request for recognition of media data which the user terminal has according to the result of the comparison.

**12.** The computer program according to claim 11, further to perform the steps of:

requesting the selected media recognition site for recognition of the media data which the user terminal has; and

transmitting the media data which the user terminal has to the media recognition site upon receiving of information for denoting acceptance of the request from the selected media recognition site.

**13.** The computer program according to claim 11, further to perform the steps of:

accepting a selected recognition type of the sample data; and

creating the first media feature value with use of a search condition input tool corresponding to the selected recognition type.

**14.** The computer program according to claim 11, further to perform the steps of:

specifying a search condition including both input data type and output data type of the media recognition site to be searched; and

transmitting the specified search condition and the sample data to the media recognition server.

**15.** The computer program according to claim 14, further to perform the step of
receiving the second media feature value from the media recognition server that manages the media recognition site that matches with the search condition.

**16.** The computer program according to claim 15, further to perform the step of
receiving an identifier for identifying a media recognition site thatmatches with the search condition together with the second media feature value.

**17.** A user terminal used in a media recognition site searching system for searching for a media recognition site that recognizes media data that matches with a user's request, the user terminal comprising:

storage means for storing sample data to be recognized and media data;
media feature value creating means for creating a first media feature value to be assumed as a reference for recognizing the stored media data according to the stored sample data with use of a search condition input tool corresponding to a recognition type for recognizing the stored sample data;
transmitting/receiving means for transmitting a search condition of the media recognition site created according to the created first media feature value together with the sample data to the media recognition site recognizing the media data;
media feature value comparing means for comparing a second media feature value that is a result of the recognition processing of the sample data executed by the media recognition site with the first media feature value; and
controlling means for selecting the media recognition site to be requested for recognition processing of the stored media data according to a result of the comparison.

**18.** The user terminal according to claim 17, further comprising
displaying means for displaying information for denoting acceptance of the selected recognition type used to recognize and process the stored sample data,
wherein the controlling means downloads a search condition input tool corresponding to the selected recognition type, and
the media feature value creating means creates the first media feature value with use of the downloaded search condition input tool.

**19.** The user terminal according to claim 17,
wherein the transmitting/receiving means receives the result of the recognition processing from the media recognition site capable of recognizing and processing the sample data.

**20.** The user terminal according to claim 19,
wherein the transmitting/receiving means receives an identifier of the media recognition site that has executed the recognition processing with the result of the recognition processing.

# FIG. 1

**110 — USER TERMINAL**
- 117
- 118
- 111 — SEARCH CONDITION INPUT TOOL
  - IMAGE SELECTION ▷ □
- 112 — NETWORK UNIT
- 113 — TOOL EXECUTION INPUT (JAVA VM)
- 114 — MEDIA FEATURE VECTOR COMPARISON UNIT
- 115 — USER TERMINAL CONTROL UNIT
- 116
  - 119 — SAMPLE VIDEO
  - 120 — REAL VIDEO
  - 121 — CORRECT FEATURE VALUE

**130**

**140 — SEARCH CONDITION INPUT TOOL ACQUISITION SERVER**
- NETWORK UNIT
- 142
  - 143 — SEARCH CONDITION INPUT TOOL 1
  - 144 — SEARCH CONDITION INPUT TOOL 2
- 141

**150 — MEDIA RECOGNITION SERVER A (MOVEMENT FOLLOWING)**
- 151 — NETWORK UNIT
- 152 — SEARCH CONDITION COLLATION UNIT
- 153 — MEDIA RECOGNITION UNIT
- 154 — TARGET SITE CONTROL UNIT

**160 — MEDIA RECOGNITION SERVER B (MOVEMENT FOLLOW-UP)**

**170 — MEDIA RECOGNITION SERVER C (VOICE RECOGNITION)**

← MEDIA RECOGNITION SITE

EP 1 513 077 A2

# FIG. 2

```
USER          SEARCH CONDITION   MEDIA RECOGNITION   MEDIA RECOGNITION   MEDIA RECOGNITION
TERMINAL      INPUT TOOL         SITE A (MOVEMENT    SITE B (MOVEMENT    SITE C (VOICE
              ACQUISITION SERVER FOLLOW-UP 1)        FOLLOW-UP 2)        RECOGNITION)
 110                        140          150                  160                  170
```

211: CONNECTION

212: DOWNLOAD SCREEN DISPLAY

213: TOOL SELECTION & DOWNLOAD

221: SEARCH CONDITION INPUT (USER'S OPERATION
     & CORRECT FEATURE VALUE CREATION)

231: SEARCH CONDITION DATAGRAM DISTRIBUTION

(INPUT TYPE = "VIDEO",
OUTPUT TYPE = "mpeg7:MovingRegionType",
SAMPLE MEDIA DATA = SAMPLE VIDEO 119)

241A: CONDITION COLLATION → YES

241B: CONDITION COLLATION → YES

241C: CONDITION COLLATION → NO

243A: RESPONSE DATAGRAM (RESULT FEATURE
      VALUE, RECOGNITION SITE A URL)

242A: RECOGNITION PROCESSING

242B: RECOGNITION PROCESSING

243B: RESPONSE DATAGRAM (RESULT FEATURE
      VALUE, RECOGNITION SITE B URL)

251: COMPARISON WITH CORRECT
     FEATURE VECTOR

261: RECOGNITION SITE SELECTION NOTICE/
     CONNECTION REQUEST

262: ACK

263: VIDEO STREAMING TRANSMITTION

264: RECOGNITION RESULT TRANSMISSION

CONNECTION FOR VIDEO TRANSMISSION TIME

EP 1 513 077 A2

# FIG. 3

USER TERMINAL DISPLAY ⌒117

```
RECOGNTION TYPE          ⌒310
MENU SCREEN
(TOOL DOWNLOAD)
311                 312

VOICE              MOVEMENT
RECOGNITION        FOLLOW-UP

313⌒  FACE
      RECOGNITION
```

⊗

⌒140

SEARCH CONDITION INPUT
TOOL ACQUISITION SERVER
                              ⌒142

⌒143

VOICE RECOGNITION/SEARCH CONDITION
INPUT TOOL
_____
(INPUT TYPE = VOICE, OUTPUT TYPE = TEXT)

⌒144

MOVEMENT FOLLOW-UP/SEARCH CONDITION
INPUT TOOL
_____
(INPUT TYPE = VIDEO, OUTPUT TYPE = list
(x, y, t) = mpeg7:MovingRegionType)

FACE RECOGNITION/SEARCH CONDITION INPUT
TOOL
_____
(INPUT TYPE = IMAGE, OUTPUT TYPE = FACE ID)

⌒145

EP 1 513 077 A2

# FIG. 4

CORRECT INPUT SCREEN (MOVEMENT) — 411

tn — 421

422

t2

t1

415

423

VIDEO SELECT — 412

413

CORRECT STORE & SITE SEARCH — 414

114 / 117

CORRECT FEATURE VALUE — 121

(x1, y1, t1),
(x2, y2, t2),
:
(xn, yn, tn) — 422

SAMPLE VIDEO — 119

EP 1 513 077 A2

# FIG. 5

SEARCH CONDITION INPUT TOOL PROCESSING — 221

VIDEO ← null — 501

CORRECT [ ] ← φ
N ← 0 — 502

SCREEN DISPLAY — 503

WAITING LOOP FOR USER OPERATION EVENT — 504

USER OPERATION

- VIDEO SELECTION — 510
  - VIDEO ← SPECIFIED VIDEO FILE — 521
- VIDEO OPERATION
  - REPLAY/STOP VIDEO/MOVE POSITION — 523
- MOUSE CLICK
  - CORRECT [N+1] ← (MOUSE xy, VIDEO, TIME)
    N ← N+1
    CORRECT [ ] IS SORTED BY TIME — 525
- CORRECT STORE
  - HARD DISK DRIVE ← CORRECT [ ] — 527
  - SEARCH CONDITION ← (INPUT TYPE = "VIDEO", OUTPUT TYPE = "mpeg7:MovingRegionType", SAMPLE MEDIA DATA = VIDEO) — 528
  - call SEARCH PROCESSING (CORRECT [ ], SEARCH CONDITION) — 529

k = 2~N — 511

CORRECT [k], TIME ≦ VIDEO, TIME — 531

LINE DISPLAY (CORRECT [k-1], xy ~CORRECT [k], xy) — 541

EP 1 513 077 A2

# FIG. 6

SEARCH PROCESSING (CORRECT FEATURE VALUE, SEARCH CONDITION) ~529

610 (SAME AS 231 IN FIG. 2)

MULTICAST SEARCH CONDITION DATAGRAM ON NETWORK

RESPONSE [ ] ← AS A RESULT OF WAITING FOR RESPONSE FOR A CERTAIN TIME ~611

~612

min ← ∞
RECOGNITION SITE URL ← null

(SAME AS 251 IN FIG. 2)

~613

k = 1~LENGTH (RESPONSE [ ])

~620

SIMILARITY ← SIMILARITY CALCULATION (RESPONSE [k], FEATURE VALUE, CORRECT FEATURE VALUE)

~621

SIMILARITY < min

~630

min ← SIMILARITY
RECOGNITION SITE URL
← RESPONSE [k], RECOGNITION SITE URL

640 (261, 262 IN FIG. 2)

~614

RECOGNITION SITE URL ≠ null

CONNECT RECOGNITION SITE URL

~641

UNTIL END OF REAL VIDEO

~642

RECEIVE VIDEO AND RECOGNITION RESULT

EP 1 513 077 A2

# FIG. 7

SEARCH CONDITION
COLLATION PROCESSING
(RECEIVING SIDE, SEARCH
CONDITION)  ⌐701

SEARCH CONDITION, INPUT TYPE ≠ "VIDEO"  ⌐702    END  ⌐710

SEARCH CONDITION, OUTPUT TYPE
≠ "mpeg7:MovingRegionType"  ⌐703    END  ⌐711

} (SAME AS 241A/B/C IN FIG. 2)

704 (SAME AS 242A/B IN FIG. 2)

RECOGNITION RESULT FEATURE VALUE
← MOVEMENT FOLLOW-UP RECOGNITION PROCESSING
(CHECK CONDITION, SAMPLE MEDIA DATA)

705 (SAME AS 243A/B IN FIG. 2)

RETURN IT TO RECEIVING SIDE (FEATURE VALUE AS
RECOGNITION RESULT, SELF-RECOGNITION SITE URL)

EP 1 513 077 A2